(19) Europäisches Patentamt
European Patent Office
Office européen des brevets

(11) **EP 2 239 298 B1**

(12) **EUROPEAN PATENT SPECIFICATION**

(45) Date of publication and mention
of the grant of the patent:
**08.06.2011 Bulletin 2011/23**

(51) Int Cl.:
***C08L 23/10*** *(2006.01)*          ***C08L 23/12*** *(2006.01)*
***C08L 23/14*** *(2006.01)*

(21) Application number: **09005247.3**

(22) Date of filing: **09.04.2009**

(54) **Polypropylene composition with high stiffness and impact strength**

Polypropylenzusammensetzung mit hoher Steifigkeit und Stoßfestigkeit

Composition polypropylène avec grande rigidité et force d'impact

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**13.10.2010 Bulletin 2010/41**

(73) Proprietor: **Borealis AG**
**1220 Vienna (AT)**

(72) Inventors:
• **Bernreitner, Klaus**
  **4010 Linz (AT)**
• **Braun, Juliane**
  **4040 Linz (AT)**

(74) Representative: **Kador & Partner**
**Corneliusstrasse 15**
**80469 München (DE)**

(56) References cited:
**EP-A1- 1 008 628      EP-A1- 1 391 482**
**EP-A1- 1 632 529      EP-A1- 2 000 504**
**EP-A1- 2 055 738      WO-A1-2007/045590**

Remarks:
The file contains technical information submitted after the application was filed and not included in this specification

EP 2 239 298 B1

**Description**

The present application relates to a polypropylene composition having a very high stiffness in combination with a good impact strength, to a method for the production thereof and an injection molded, extruded or extrusion blow molded article, especially car components or other technical component requiring high mechanical strength and dimensional stability made thereof. Further, the composition has improved recycling properties.

Various attempts have been made to improve the stiffness of polypropylenes, e.g. high filler contents and combining fillers with special nucleation (usually beta-nucleation). However, a high amount of filler has several disadvantages like reduction of the toughness, an increased embrittlement, a higher scratch sensitivity and a larger amount of surface defects, a reduction of the processability and - depending on the filler - smell and taste problems.

Beta-nucleation of polypropylene generally results in a lower stiffness compared with alpha-nucleated polypropylene but the impact properties are better. To improve the stiffness of beta-nucleated polypropylenes high amounts of filler (> 50 wt.%) are usually added.

WO 03/097731 describes a beta-nucleated polypropylene with a content of talc of up to 70 %. Although the compositions described therein have an acceptable impact strength in a charpy notched test, the stiffness of the compositions is considerably low. The beta-nucleation will also reduce the thermal resistance of the compositions, as the melting point is reduced.

US 5,141,994 describes a crystalline polypropylene with acceptable impact strength, however, the stiffness can also be improved.

EP 1 183 307 describes a process for the production of a crystalline polypropylene. The problem of impact resistance is only addressed for heterophasic propylene copolymers, still said impact resistance as well as the stiffness of the polymer can be improved.

Thus, the object of the present invention is to provide a polypropylene composition having high impact strength in combination with high stiffness.

Therefore, the present invention provides a polypropylene composition comprising

- a propylene homo- or copolymer (A);

- a propylene homo- or copolymer (B) having a weight average molecular weight ($M_w$) of at least 900 kg/mol; and

- an inorganic filler (C) in an amount of at least 3.0 wt. % based on the total amount of the polypropylene composition;

whereby

propylene homo- or copolymer (A) and propylene homo- or copolymer (B) are different.

By the sole addition of component (B) to component (A) the tensile modulus of component (A) is not affected. However, the impact properties are lowered.

The sole addition of component (C) to component (A) leads to an improvement of the tensile modulus. However, the impact properties are also lowered.

It has been surprisingly found that the combination of inorganic filler (C) and polypropylene (B) with a high weight average molecular weight has a synergistic effect. The combination leads to excellent impact properties in combination with improved stiffness. At the same time, the recycling properties are significantly improved. Moreover the composition allows excellent surface quality and at the same time excellent scratch resistance.

Therefore, the composition according to all embodiments of the invention are especially suitable for injection molded, extruded or extrusion blow molded articles, especially car components or other technical components requiring high mechanical strength and dimensional stability made thereof.

The molecular weight distribution is frequently determined as $M_w/M_n$ by gel permeation chromatography (GPC), which is a solvent technique measuring the percentage or distribution of molecules having different molecular weight. The method is usually carried out according to ISO16014-1:2003. $M_w$ is the weight average molecular weight and $M_n$ is the number average molecular weight. In the literature the terms "the molecular weight distribution", "MWD", "polydispersity" and "polydispersity index" are prevalently used synonymously to denote the ratio $M_w/M_n$ which is scientifically not correct.

The use of GPC analysis finds its limitation when ultra high molecular weight material is concerned. GPC as a solution technique requires that the polymer chains are sufficiently soluble and sufficiently stable in solution. Polymers having a molecular weight of > 2,000,000 g/mol are generally completely insoluble. Furthermore, even if soluble polymer chains with a molecular weight of above 1,000,000 g/mol tend to break when dissolved for the GPC measurement or during the measurement leading to an incorrect result. Thus, the GPC method is not easily applicable to polymers comprising a significant amount of a fraction having an $M_w$ of above 1,000,000 g/mol.

Apart from GPC measurement, the broadness of the molecular weight distribution the broadness of the molecular weight distribution can also be determined by melt rheological measurement according ISO 6721-1. The values obtained by said measurement are given in $Pa^{-1}$. This value is also referred to as polydispersity index (PI) in the literature, e.g. in WO 2008/006586.

All expressions containing letters from the Greek alphabet are repeated in squared brackets in case errors occur when reprinted.

The values of storage modulus (G'), loss modulus (G"), complex modulus (G*) and complex viscosity ($\eta$*) [(eta*)] are obtained as a function of frequency ($\omega$) [(omega)] as described in the experimental part. The polydispersity index,

$$PI = 10^5/G_c,$$

is calculated from cross-over point of G'($\omega$) [G'(omega)] and G"($\omega$) [G"(omega)] at 230°C, for which

$G'(\omega_c) = G"(\omega_c) = G_c$ [G'(omega$_c$) = G"(omegac) = G$_c$]

holds.

A distinction between the polydispersity index (PI), measured according ISO 6721-1 and $M_w/M_n$ is without any ambiguity because $M_w/M_n$ is a dimensionless quantity whereas the PI determined according to ISO 6721-1 is reported in $Pa^{-1}$. In the present invention the term "polydispersity index" or "PI" denote the value obtained according ISO 6721-1.

Owing to the high weight average molecular weight ($M_w$) of the propylene homo- or copolymer (B) used in the present invention, the polydispersity index according to ISO 6721-1 has been used to determine the molecular weight distribution.

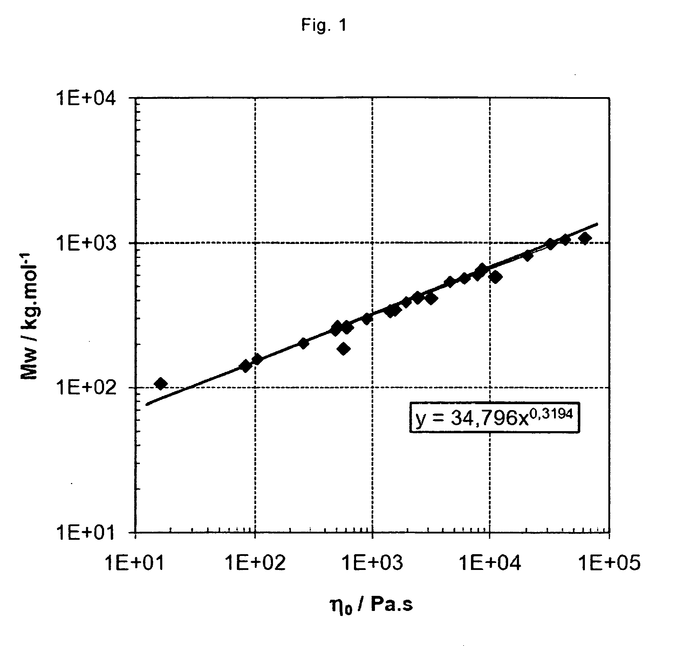

Further, due to the high weight average molecular weight of the propylene homo- or copolymer (B) it was also not possible to determine the weight average molecular weight ($M_w$) in the usual manner by GPC measurement. Instead the weight average molecular weight of component (B) was calculated from the zero shear viscosity ($\eta_0$) [(eta$_0$)] as resulting from a Cox-Merz conversion of the complex viscosity. Said calculation was carried out with using the calibration curve depicted in Fig. 1. Said curve has been established in Grein et al., Rheol Acta, (2007), 1083-1089.

The term "polypropylene" denotes a propylene homo- or copolymer or a mixture of propylene homo- or copolymers.

The polypropylene composition according to the invention can be formed into articles of various shapes through known techniques, such as injection molding, extrusion or blow molding.

In the following preferred features of the present invention are described.

Component (A) is preferably present in an amount of at least 45 wt.%, more preferably at least 55 wt.% and most preferably at least 60 wt.% based on the amount of (A) + (B) + (C).

Preferably the amount of component (A) is less than 92 wt.%, more preferably not more than 90 wt.%, even more preferable not more than 85 wt.% and most preferably not more than 80 wt.% based on the amount of (A) + (B) + (C).

Preferably, the amount of component (B) is more than 5.0 wt.%, more preferably is at least 6.0 wt.%, even more preferably is at least 9 wt.%, even more preferably is at least 12 wt.% and most preferably is at least 15 wt.% based on the amount of (A) + (B) + (C).

The amount of component (B) is preferably not more than 35 wt.%, more preferably is not more than 30 wt.% and most preferably is not more than 25 wt.% based on the amount of (A) + (B) + (C).

Preferably component (C) is present in an amount of at least 4.5 wt.%, more preferably of at least 6.0 and most preferably at least 7.5 wt.% based on the amount of (A) + (B) + (C).

Component (C) is preferably present in an amount of not more than 30 wt.%, more preferably not more than 25 wt.%, even more preferably of not more than 20 wt.% , even more preferably of not more than 15 wt.% and most preferably not more than 12.5 wt.% based on the amount of (A) + (B) +(C).

A low filler content usually results in an improved surface quality and improved scratch resistance.

Preferably, the amount of (A) + (B) + (C) is at least 90 wt.%, more preferably at least 95 wt.%, even more preferably at least 97.5 wt.% and most preferably at least 99.5 wt.% of the polypropylene composition. Preferably, the propylene composition comprises no polymeric components besides (A) and (B).

Preferably in the polypropylene composition the weight ratio (B):(C) is not more than 20:1.0, more preferably is not more than 8.0:1.0 and most preferably not more than 4.0:1.0.

In the polypropylene composition the weight ratio (B):(C) preferably is at least 1.0:2.0, more preferably at least 1.0:1.0, even more preferably at least 1.5:1.0.

Preferably in the polypropylene composition the weight ratio [(A)+(B)]:(C) is not more than 20:1, more preferably not more than 15:1 and most preferably not more than 12:1.

In the polypropylene composition the weight ratio [(A)+(B)]:(C) preferably at least 2:1 more preferably at least 4:1 and most preferably at least 6:1.

Preferably, component (A) is a propylene homopolymer or a propylene copolymer with a comonomer content of not more than 5 mol%, more preferably a propylene homopolymer or a propylene copolymer with a comonomer content of not more than 2.5 mol%, even more preferably a propylene homopolymer or a propylene copolymer with a comonomer content of not more than 1.0 mol% and most preferably component (A) is a propylene homopolymer.

In case component (A) is a propylene copolymer, the comonomers used for the production of component (A) may be selected from any copolymerisable alpha-olefins. However, ethylene and/or $C_4$- to $C_{20}$-alpha-olefins are preferred, even more preferred are ethylene and/or $C_4$- to $C_{15}$-alpha-olefins, even more preferred are ethylene and/or $C_4$- to $C_{10}$-alpha-olefins. Ethylene, 1-butene, 1-hexene, and 1-octene are preferred $C_4$ to $C_{10}$ alpha-olefins. The most preferred alpha-olefin is ethylene.

The $MFR_2$ of component (A) determined according to ISO 1133 at 230 °C and under a load of 2.16 kg, is preferably at least 1.0 g/10 min, more preferably at least 5.0 g/10 min and most preferably at least 10 g/10 min. Component (A) preferably has an $MFR_2$, determined according to ISO 1133 at 230°C and under a load of 2.16 kg, of not more than 1000 g/10 min, more preferably of not more than 750 g/10 min, even more preferably of not more than 500 g/10 min and most preferably not more than 350 g/10 min.

Preferably, component (A) has an impact strength in a charpy notch test according to ISO 179/1eA:2000 at + 23 °C of at least 0.5 kJ/m$^2$, more preferably of at least 0.8 kJ/m$^2$ and most preferably of at least 1.0 kJ/m$^2$ measured on a V-notched test specimen prepared by injection molding according to ISO 1873-2. Usually said impact strength will not be higher than 15 kJ/m$^2$.

The weight average molecular weight of component (A) is not more than 325 kg/mol and most preferably not more than 300 kg/mol. The $M_w$ of component (A) is at least 25 kg/mol.

Preferably, component (B) has a polydispersity index, determined according to ISO 6721-1, of at least 1.8 Pa$^{-1}$, more preferably of at least 2.2 Pa$^{-1}$ and most preferably of at least 2.7 Pa$^{-1}$. Usually said polydispersity index will not be higher than 6.0 Pa$^{-1}$.

Preferably, component (B) has a weight average molecular weight ($M_w$) of at least 950 kg/mol, more preferably of at least 1,000 kg/mol, even more preferably of at least 1,050 kg/mol, even more preferably of at least 1,125 kg/mol, even more preferably of at least 1,200 kg/mol and most preferably of at least 1275 kg/mol. Usually, said $M_w$ will not be higher than 2,500 kg/mol.

As already mentioned above the weight average molecular weight of component (B) was calculated from the zero shear viscosity ($\eta_0$) [(eta$_0$)] as resulting from a Cox-Merz conversion of the complex viscosity. Said calculation was carried out with using the calibration curve given in Fig. 1. Said curve was established in Grein et al., Rheol Acta, (2007), 1083-1089.

Preferably, component (B) obtained from the reactor has an $MFR_{21}$, measured according to ISO 1133 at 230°C and under a load of 21.6 kg, of at least 0.01 g/10 min, more preferably of at least 0.10 g/10 min, even more preferably of at least 0.25 g/10 min and most preferably of at least 0.50 g/10 min.

Further, preferably, component (B) obtained from the reactor has an $MFR_{21}$, measured according to ISO 1133 at 230°C and under a load of 21.6 kg, of not more than 5.0 g/10 min, more preferably of not more than 4.5 g/10 min, even more preferably of not more than 4.0 g/10 min and most preferably of not more than 3.8 g/10 min.

Preferably, component (B) has an $MFR_2$, measured according to ISO 1133 at 230°C and under a load of 2.16 kg, of at least 0.001 g/10 min, more preferably of at least 0.002 g/10 min, even more preferably of at least 0.004 g/10 min, even more preferably of at least 0.006 g/10 min, and most preferably of at least 0.008 g/10 min after being compounded together with 0.07 wt. % Calcium Stearate and 0.30 wt.% Tris(2,4-di-tert-butylphenyl)phosphite), 0.30 wt.% Pentaerythritol Tetrakis(3-(3,5-di-tert-butyl-4-hydroxyphenyl)propionate.

Further, preferably, component (B) has an $MFR_2$, measured according to ISO 1133 at 230°C and under a load of 2.16 kg, of not more than 2.0 g/10 min, more preferably of not more than 1.0 g/10 min, even more preferably of not more than 0.5 g/10 min and most preferably of not more than 0.05 g/10 min after being compounded together with 0.07 wt. % Calcium Stearate and 0.30 wt.% Tris(2,4-di-tert-butylphenyl)phosphite), 0.30 wt.% Pentaerythritol Tetrakis(3-(3,5-di-tert-butyl-4-hydroxyphenyl)propionate.

Preferably, component (B) has an $MFR_{21}$, measured according to ISO 1133 at 230°C and under a load of 21.6 kg, of at least 0.01 g/10 min, more preferably of at least 0.1 g/10 min, even more preferably of at least 0.5 g/10 min and most preferably of at least 1.0 g/10 min after being compounded together with 0.07 wt. % Calcium Stearate and 0.30 wt.% Tris(2,4-di-tert-butylphenyl)phosphite), 0.30 wt.% Pentaerythritol Tetrakis(3-(3,5-di-tert-butyl-4-hydroxyphenyl)propionate.

Further, preferably, component (B) has an $MFR_{21}$, measured according to ISO 1133 at 230°C and under a load of 21.6 kg, of not more than 4.5 g/10 min, more preferably of not more than 4.0 g/10 min and most preferably of not more than 3.8 g/10 min after being compounded together with 0.07 wt. % Calcium Stearate and 0.30 wt.% Tris(2,4-di-tert-butylphenyl)phosphite), 0.30 wt.% Pentaerythritol Tetrakis(3-(3,5-di-tert-butyl-4-hydroxyphenyl)propionate.

As calcium stearate SP distributed by Faci may be used.

Irganox B225 which is a 1:1 mixture of Tris(2,4-di-tert-butylphenyl)phosphite) and Pentaerythritol Tetrakis(3-(3,5-di-tert-butyl-4-hydroxyphenyl)propionate may be used.

Preferably, the amount soluble in cold xylene of component (B) is not more than 7.0 wt.%, more preferably not more than 5.0 wt.% and most preferably not more than 3.0 wt.% based on the total amount of component (B).

Preferably, component (B) has an intrinsic viscosity, determined according to DIN ISO 1628/1 in decalin at a temperature of 135 °C, of at least 5.0 dl/g, more preferably of at least 5.5 dl/g, even more preferably of at least 6.0 dl/g and most preferably 6.5 dl/g. Usually the intrinsic viscosity will be not more than 14 dl/g, preferably not more than 12 dl/g.

Preferably, component (B) is a propylene homopolymer or a propylene copolymer with a comonomer content of not more than 5 mol%, more preferably a propylene homopolymer or a propylene copolymer with a comonomer content of not more than 2.5 mol%, even more preferably a propylene homopolymer or a propylene copolymer with a comonomer content of not more than 1.0 mol% and most preferably component (B) is a propylene homopolymer.

In case component (B) is a propylene copolymer, the comonomers used for the production of component (B) may be selected from any compolymerisable alpha-olefins. However, ethylene and/or $C_4$- to $C_{20}$-alpha-olefins are preferred, even more preferred are ethylene and/or $C_4$- to $C_{15}$-alpha-olefins, even more preferred are ethylene and/or $C_4$- to $C_{10}$-alpha-olefins, e.g. ethylene, 1-butene, 1-hexene, 1-octene, and most preferably the alpha-olefin is ethylene.

Preferably, the propylene homo- or copolymer (B) is produced in the presence of a Ziegler-Natta catalyst, more preferably in the presence of a Ziegler-Natta catalyst capable of catalyzing the polymerization of propylene at a pressure from 10 to 100 bar, preferably from 25 to 80 bar, more preferably from 25 to 50 bar and at a temperature from 40 to 120 °C, preferably from 60 to 100 °C, more preferably from 60 to 80 °C.

The Ziegler-Natta catalyst used for the preparation of the propylene homo- or copolymer (B) preferably comprises a catalyst component, a cocatalyst component, an external donor, the catalyst component of the catalyst system primarily containing magnesium, titanium, halogen and an internal donor. Electron donors control the stereo-specific properties and/or improve the activity of the catalyst system. A number of electron donors including ethers, esters, polysilanes, polysiloxanes, and alkoxysilanes are known in the art.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds. The titanium compound usually is a halide or oxyhalide, an organic metal halide, or a purely metal organic compound in which only organic ligands have been attached to the transition metal. Particularly preferred are the titanium halides, especially titanium tetrachloride, titanium trichloride and titanium tetrachloride being particularly preferred.

Magnesium dichloride can be used as such or it can be combined with silica, e.g. by absorbing the silica with a solution or slurry containing magnesium dichloride. A lower alcohol can be used which preferably is methanol or ethanol and most preferably ethanol.

A preferred type of catalyst to be used in the present invention is disclosed in EP 591 224 which discloses a method for preparing a pro-catalyst composition from magnesium dichloride, a titanium compound, a lower alcohol and an ester of phthalic acid containing at least five carbon atoms. According to EP 591 224, a trans-esterification reaction is carried out at an elevated temperature between the lower alcohol and the phthalic acid ester, whereby the ester groups from the lower alcohol and the phthalic ester change places.

The alkoxy group of the phthalic acid ester used comprises at least five carbon atoms, preferably at least eight carbon atoms. Thus, as the ester may be used propylhexyl phthalate, dioctyl phthalate, di-isodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the pro-catalyst composition, transesterifies the catalyst at an elevated temperature. It is preferred to carry out the transesterification at a temperature which is at least 110 °C, preferably is at least 120°C and which preferably does not exceed 140°C more preferably does not exceed 115 °C.

The catalyst is used together with an organometallic cocatalyst and with an external donor. Generally, the external donor has the formula

$$R_nR'_mSi(R''O)_{4-n-m}$$

wherein

R and R' can be the same or different and represent a linear, branched or cyclic aliphatic, or aromatic group;
R'' is methyl or ethyl;
n is an integer of 0 to 3;
m is an integer of 0 to 3; and
n+m is 1 to 3.

In particular, the external donor is selected from the group consisting of dicyclopentyl dimethoxy silane (DCPDMS), diisopropyl dimethoxy silane, di-isobutyl dimethoxy silane, and di-t-butyl dimethoxy silane.

Any cocatalyst known in the art may be used in the present invention, preferably, an organoaluminium compound is used as the cocatalyst. The organoaluminium compound is preferably selected from the group consisting of trialkyl aluminium, dialkyl aluminium chloride and alkyl aluminium sesquichloride.

Such catalysts are preferably introduced into the first reactor only. The components of the catalyst can be fed into the reactor separately or simultaneously or the components of the catalyst system can be precontacted prior to the reactor.

Such pre-contacting can also include a catalyst pre-polymerization prior to feeding into the polymerization reactor. In the pre-polymerization, the catalyst components are contacted for a short period with a monomer before feeding to the reactor.

The propylene homo- or copolymer (B) can have a unimodal or multimodal, like bimodal, molar mass distribution (MWD). Thus, the equipment of the polymerization process can comprise any polymerization reactors of conventional design for producing propylene homo- or copolymers (B). For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. Preferably the slurry reactor comprises, more preferably is a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system can comprise one or more conventional stirred tank slurry reactors, as described in WO 94/26794, and/or one or more gas phase reactors.

Preferably the reactor(s) used is/are selected from the group of loop and gas phase reactors, more preferably the process employs at least one loop reactor and optionally at least one gas phase reactor, more preferably at least one loop reactor and at least one gas phase reactor, and most preferably at least one loop reactor and at least two gas phase reactors. By carrying out the polymerization in the different polymerization reactors in the presence of different amounts of hydrogen the MWD of the product can be broadened and its mechanical properties improved. It is also possible to use several reactors of each type, e.g. one loop reactor and two or three gas phase reactors in series. Usually not more than eight reactors are used to produce component (B).

Preferably, component (C) is selected from the group of inorganic modifiers having a highly anisotropic particulate structure, being anisotropic in a one-dimensional (fiber-like) or two-dimensional (platelet-like) fashion. Preferred examples include natural silicates, glass platelets and/or fibers, more preferably inosilicates (e.g. wollastonite), phyllosilicates (e.g. clay minerals and mica) and/or glass platelets, even more preferably phyllosilicates or wollastonite, even more preferably clay minerals (e.g. talc, montmorillonite, hectorite, vermiculite, bentonite), mica or wollastonite. Among these, talc, mica and wollastonite are preferred whereof talc is especially preferred.

Preferably, before compounding, component (C) has a particle size d95 of 50 micrometer or less, preferably 25 micrometer or less and most preferably 15 micrometer or less measured by laser diffraction according to ISO 13320-1: 1999.

Preferably, the particle size d95 before compounding of component (C) preferably is not less than 1 micrometer, more preferably not less than 2 micrometers measured by laser diffraction according to ISO 13320-1:1999.

Preferably, component (C) has a specific surface (BET) before compounding of at least 5.0 m$^2$/g, more preferably of at least 7.0 m$^2$/g and most preferably at least 9.0 m$^2$/g, determined according to DIN 66131/2. Said surface area will usually not be higher than 100.0 m$^2$/g.

Preferably, component (C) has an average aspect ratio before compounding, defined as the ratio between the biggest and the smallest average dimensions of the reinforcing agents before compounding the polypropylene composition, of at least 5.0, even more preferably of at least 7.5 and most preferably of at least 10.0. Usually the average aspect ratio will not be higher than 50.0.

Preferably, the polypropylene composition has an MFR$_2$, determined according to ISO 1133 at 230 °C and under a load of 2.16 kg, of at least 0.01 g/10 min, more preferably of at least 0.1 g/10 min, even more preferably of at least 1.0 g/10 min and most preferably of at least 2.0 g/10 min.

The polypropylene composition preferably has an MFR$_2$, determined according to ISO 1133 at 230 °C and under a load of 2.16 kg, of not more than 100 g/10 min, more preferably of not more than 80 g/10 min, and most preferably of not more than 60 g/10 min.

Further, preferably, the polypropylene composition has a heat deflection temperature determined according to ISO 75-2/A at 1.8 MPa of at least 60°C measured on a test specimen prepared by injection molding according to ISO 1873-2. The heat deflection temperature will usually not be higher than 120 °C.

Preferably, the polypropylene composition has a crystallization temperature T$_c$ determined according to ISO 3146-3/C2 of at least 120°C, more preferably of at least 125°C measured on a test specimen prepared by injection molding according to ISO 1873-2. Usually said T$_c$ will not be higher than 145 °C

Further, preferably, the polypropylene composition has a melting temperature T$_m$ determined according to ISO 3146-3/C2 of at least 155 °C, more preferably of at least 160°C measured on a test specimen prepared by injection molding according to ISO 1873-2. Said T$_m$ will usually not be higher than 190°C.

Preferably, polypropylene composition has a heat of fusion determined according to ISO 3146-3/C2 of at least 80 J/g, more preferably of at least 90 J/g and most preferably of at least 100 J/g measured on a test specimen prepared by injection molding according to ISO 1873-2. The heat of fusion will usually not be higher than 150 J/g.

Preferably, the polypropylene composition has a heat of crystallization determined according to ISO 3146-3/C2 of at least 80 J/g, more preferably of at least 85 J/g and most preferably of at least 90 J/g measured on a test specimen prepared by injection molding according to ISO 1873-2. The heat of crystallization will usually not be higher than 130 J/g.

Usually, in the polypropylene composition the following relation is fulfilled

$$E \times C \leq 20000 \frac{MPa \times kJ}{m^2}$$

wherein

E    is the tensile modulus in MPa, determined according to ISO 527-2, of the polypropylene composition measured on a test specimen prepared by injection molding according to ISO 1873-2;

C    is the impact strength of the polypropylene composition in a charpy notch test according to ISO 179/1eA:2000 at + 23 °C measured on a V-notched test specimen prepared by injection

Preferably, polypropylene composition has a longitudinal shrinkage of not more than 2.5 %, more preferably of not more than 2.0 %.

Further, preferably, the polypropylene composition has a transversal shrinkage of not more than 2.0 %, more preferably of not more than 1.5 %.

Preferably, the transversal shrinkage and the longitudinal shrinkage fulfill the following relation

$$\left|(\text{transversal shrinkage}) - (\text{longitudinal shrinkage})\right| \leq 0.5\% .$$

The vertical lines denote the absolute value of the number in between, sometimes also referred to as abs(x) , e.g.|-4| = *abs*(-4) = 4.

Moreover, the polypropylene composition of the invention may further contain various additives, such as miscible thermoplastics, antioxidants, UV-stabilizers, lubricants, demoulding agents, colouring agents, and foaming agents which can be added to the composition before, during or after the blending in an amount of up to 3.0 wt%, preferably up to 1.0 wt% based on the total polypropylene composition.

In a first variant of the invention, preferably, in the polypropylene composition the following relation is fulfilled

$$E \times C \geq 7000 \frac{MPa \times kJ}{m^2}$$

wherein

E    is the tensile modulus in MPa, determined according to ISO 527-2, of the polypropylene composition measured on a test specimen prepared by injection molding according to ISO 1873-2;

C    is the impact strength of the polypropylene composition in a charpy notch test according to ISO 179/1eA:2000 at + 23 °C measured on a V-notched test specimen prepared by injection molding according to ISO 1873-2.

Preferably, the polypropylene composition according to the first variant of the invention has a tensile modulus determined according to ISO 527-2 of at least 2500 MPa measured on a test specimen prepared by injection molding according to ISO 1873-2.

Preferably, the polypropylene composition according to the first variant of the invention has an MFR$_2$, determined

according to ISO 1133 at 230°C and under a load of 2.16 kg, of not more than 25 g/10 min.

In the following preferred features of the first variant of the invention are described.

Component (A) preferably has a density of at least 905 $kg/m^3$, more preferably of at least 910 $kg/m^3$ and most preferably of at least 915 $kg/m^3$.

Preferably the density of component (A) is not more than 935 $kg/m^3$, more preferably of not more than 930 $kg/m^3$ and most preferably not more than 925 $kg/m^3$.

Preferably, the $MFR_2$ of component (A) determined according to ISO 1133 at 230 °C and under a load of 2.16 kg, is not more than 50 g/10 min, more preferably is not more than 40 g/10 min and most preferably is not more than 30 g/10 min.

Preferably, component (A) has an impact strength in a charpy notch test according to ISO 179/1 eA:2000 at + 23 °C of at least 2.0 $kJ/m^2$, more preferably of at least 2.5 $kJ/m^2$ and most preferably of at least 3.0 $kJ/m^2$ measured on a V-notched test specimen prepared by injection molding according to ISO 1873-2.

Preferably, component (A) comprises an alpha-nucleating agent. Preferably, the alpha-nucleating agent is present in an amount of 0.0001 to 1.00 wt%, more preferably in the amount of 0.001 to 0.50 wt% based on component (A). Nucleating agents of polypropylenes are substances with the ability to act as substrates for crystal formation by epitaxy thus increasing the number of nuclei of the system. Thereby, the nucleating agents improve the crystallization behavior in processing, i.e. decreasing the cycle time or increasing the line speed, increase the crystallinity in the final product and, additionally, influence the optical and mechanical properties in terms of improved stiffness.

Any suitable alpha-nucleating agents known in the art can be used, e.g. 1,3:2,4-bis-(3,3-dimethyl-benzylidene)-sorbitol. A further alpha-nucleation method, herein referred to as "BNT" is a special reactor technique, where the catalyst is pre-polymerized with monomers like vinyl-cyclohexane (VCH). This method is described in detail in EP 0 316 187 A2 which is hereby incorporated by reference. For the purpose of this invention, BNT is referred to as an alpha-nucleating agent.

Preferably, the alpha-nucleating agent is not a metal compound.

The polypropylene composition preferably has an $MFR_2$, determined according to ISO 1133 at 230 °C and under a load of 2.16 kg, of not more than 20 g/10 min, more preferably of not more than 15 g/10 min, even more preferably of not more than 10 g/10 min and most preferably of not more than 5.0 g/10 min.

Preferably the polypropylene composition has an impact strength in a charpy notch test according to ISO 179/1eA:2000 at + 23 °C of at least 2.0 $kJ/m^2$, more preferably of at least 2.5 and most preferably of at least 2.75 $kJ/m^2$ measured on a V-notched test specimen prepared by injection molding according to ISO 1873-2. Usually said impact strength will not be higher than 15 $kJ/m^2$.

Preferably, the polypropylene composition has a tensile modulus, determined according to ISO 527-2, of at least 2700 MPa and most preferably of at least 2900 MPa measured on a test specimen prepared by injection molding according to ISO 1873-2.

Preferably, in the polypropylene composition the following relation is fulfilled

$$E \times C \geq 7500 \frac{MPa \times kJ}{m^2}$$

wherein

E    is the tensile modulus in MPa, determined according to ISO 527-2, of the polypropylene composition measured on a test specimen prepared by injection molding according to ISO 1873-2;

C    is the impact strength of the polypropylene composition in a charpy notch test according to ISO 179/1eA:2000 at + 23 °C measured on a V-notched test specimen prepared by injection molding according to ISO 1873-2.

More preferably in the polypropylene composition the following relation is fulfilled

$$E \times C \geq 8000 \frac{MPa \times kJ}{m^2}$$

whereby E and C are the same as defined above.

Usually the tensile modulus of the composition determined as described above will not be higher than 5,000 MPa.

Further, preferably, the polypropylene composition has a heat deflection temperature determined according to ISO 75-2/A at 1.8 MPa of at least 65°C measured on a test specimen prepared by injection molding according to ISO 1873-2.

Further, preferably, the polypropylene composition has a melting temperature $T_m$ determined according to ISO 3146-3/C2 of at least 165 °C measured on a test specimen prepared by injection molding according to ISO 1873-2.

In a second variant of the invention in the polypropylene composition preferably the following relation is fulfilled

$$E \times C \geq 3000 \frac{MPa \times kJ}{m^2}$$

wherein

E    is the tensile modulus in MPa, determined according to ISO 527-2, of the polypropylene composition measured on a test specimen prepared by injection molding according to ISO 1873-2;

C    is the impact strength of the polypropylene composition in a charpy notch test according to ISO 179/1eA:2000 at + 23 °C measured on a V-notched test specimen prepared by injection molding according to ISO 1873-2.

Preferably, the polypropylene composition according to the second variant of the invention has an $MFR_2$, determined according to ISO 1133 at 230°C and under a load of 2.16 kg, of more than 25 g/10 min.

In the following preferred features of the second variant of the invention.

Preferably, component (A) has an $MFR_2$, determined according to ISO 1133 at 230°C and under a load of 2.16 kg, of at least 50 g/10 min, more preferably of at least 100 g/10 min, even more preferably of at least 150 g/10 min and most preferably of at least 200 g/10 min.

Preferably, the propylene homo- or copolymer (A) is produced in the presence of a Ziegler-Natta catalyst, more preferably in the presence of a Ziegler-Natta catalyst capable of catalyzing the polymerization of propylene at a pressure from 10 to 100 bar, preferably from 25 to 80 bar, more preferably from 25 to 50 bar and at a temperature from 40 to 120 °C, preferably from 60 to 100 °C, more preferably from 60 to 80 °C.

The Ziegler-Natta catalyst used for the preparation of the propylene homo- or copolymer (A) preferably comprises a catalyst component, a cocatalyst component, an external donor, the catalyst component of the catalyst system primarily containing magnesium, titanium, halogen and an internal donor. Electron donors control the stereo-specific properties and/or improve the activity of the catalyst system. A number of electron donors including ethers, esters, polysilanes, polysiloxanes, and alkoxysilanes are known in the art.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds. The titanium compound usually is a halide or oxyhalide, an organic metal halide, or a purely metal organic compound in which only organic ligands have been attached to the transition metal. Particularly preferred are the titanium halides, especially titanium tetrachloride, titanium trichloride and titanium tetrachloride being particularly preferred.

Magnesium dichloride can be used as such or it can be combined with silica, e.g. by absorbing the silica with a solution or slurry containing magnesium dichloride. A lower alcohol can be used which preferably is methanol or ethanol and most preferably ethanol.

A preferred type of catalyst to be used in the present invention is disclosed in EP 591 224 which discloses a method for preparing a pro-catalyst composition from magnesium dichloride, a titanium compound, a lower alcohol and an ester of phthalic acid containing at least five carbon atoms. According to EP 591 224 , a trans-esterification reaction is carried out at an elevated temperature between the lower alcohol and the phthalic acid ester, whereby the ester groups from the lower alcohol and the phthalic ester change places.

The alkoxy group of the phthalic acid ester used comprises at least five carbon atoms, preferably at least eight carbon atoms. Thus, as the ester may be used propylhexyl phthalate, dioctyl phthalate, di-isodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the pro-catalyst composition, transesterifies the catalyst at an elevated temperature. It is preferred to carry out the transesterification at a temperature which is at least 110 °C, preferably is at least 120°C and which preferably does not exceed 140°C more preferably does not exceed 115 °C.

The catalyst is used together with an organometallic cocatalyst and with an external donor. Generally, the external donor has the formula

$$R_nR'_mSi(R''O)_{4-n-m}$$

wherein
R and R' can be the same or different and represent a linear, branched or cyclic aliphatic, or aromatic group;
R" is methyl or ethyl;
n is an integer of 0 to 3;
m is an integer of 0 to 3; and
n+m is 1 to 3.

In particular, the external donor is selected from the group consisting of cyclohexyl methylmethoxy silane (CHMMS), diisopropyl dimethoxy silane, di-isobutyl dimethoxy silane, and di-t-butyl dimethoxy silane.

Any cocatalyst known in the art may be used in the present invention, preferably, an organoaluminium compound is used as the cocatalyst. The organoaluminium compound is preferably selected from the group consisting of trialkyl aluminium, dialkyl aluminium chloride and alkyl aluminium sesquichloride.

Such catalysts are preferably introduced into the first reactor only. The components of the catalyst can be fed into the reactor separately or simultaneously or the components of the catalyst system can be precontacted prior to the reactor.

Such pre-contacting can also include a catalyst pre-polymerization prior to feeding into the polymerization reactor. In the pre-polymerization, the catalyst components are contacted for a short period with a monomer before feeding to the reactor.

The propylene homo- or copolymer (A) can have a unimodal or multimodal, like bimodal, molar mass distribution (MWD). Thus, the equipment of the polymerization process can comprise any polymerization reactors of conventional design for producing propylene homo- or copolymers (A). For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. Preferably the slurry reactor comprises, more preferably is a bulk loop reactor. By "gas phase reactor" is meant any mechanically mixed or fluid bed reactor. In case one or more gas phase reactor is/are used, it/they preferably comprise(s) a mechanically agitated fluid bed reactor with gas velocities of at least 0.2 m/sec.

Thus, the polymerization reactor system can comprise one or more conventional stirred tank slurry reactors, as described in WO 94/26794, and/or one or more gas phase reactors.

Preferably, the polypropylene composition has an $MFR_2$, determined according to ISO 1133 at 230 °C and under a load of 2.16 kg, of at least 27 g/10 min, more preferably of at least 30 g/10 min and most preferably of at least 32 g/10 min.

Preferably, the polypropylene composition has a tensile modulus determined according to ISO 527-2, of at least 2,000 MPa, more preferably of at least 2,250 MPa, even more preferably of at least 2,500 MPa and most preferably of at least 2,700 MPa measured on a test specimen prepared by injection molding according to ISO 1873-2.

Preferably in the polypropylene composition the following relation is fulfilled

$$E \times C \geq 3500 \frac{MPa \times kJ}{m^2}$$

wherein

E    is the tensile modulus in MPa, determined according to ISO 527-2, of the polypropylene composition measured on a test specimen prepared by injection molding according to ISO 1873-2;

C    is the impact strength of the polypropylene composition in a charpy notch test according to ISO 179/1eA:2000 at + 23 °C measured on a V-notched test specimen prepared by injection molding according to ISO 1873-2.

More preferably in the polypropylene composition the following relation is fulfilled

$$E \times C \geq 4000 \frac{MPa \times kJ}{m^2}$$

whereby E and C are the same as defined above.

Usually the tensile modulus of the composition determined as described above will not be higher than 5,000 MPa.

Preferably, the polypropylene composition has a longitudinal shrinkage of not more than 1.8 %, more preferably of not more than 1.5 % and most preferably of not more than 1.3 %.

Further, preferably, the polypropylene composition has a transversal shrinkage of not more than 1.1 %.

Preferably, the transversal shrinkage and the longitudinal shrinkage fulfill the following relation

$$|(\text{transversal shrinkage}) - (\text{longitudinal shrinkage})| \leq 0.3\% .$$

More preferably, the transversal shrinkage and the longitudinal shrinkage fulfill the following relation

$$|(\text{transversal shrinkage}) - (\text{longitudinal shrinkage})| \leq 0.2\% .$$

The vertical lines denote the absolute value of the number in between, sometimes also referred to as abs(x) , e.g. |-4| = abs(-4) = 4.

The present invention is further directed to a process for the production of the propylene composition according to all embodiments of the invention.

The present invention is furthermore directed to a process for preparing a polypropylene composition comprising

- a propylene homo- or copolymer (A);

- a propylene homo- or copolymer (B) having a weight average molecular weight ($M_w$) of at least 900 kg/mol; and

- an inorganic filler (C) in an amount of at least 3.0 wt. % based on the total amount of the polypropylene composition

whereby
propylene homo- or copolymer (A) and propylene homo- or copolymer (B) are different as to their weight average molecular weights, whereby propylene homo- or copolymer (A) has a weight average molecular weight in the range of 25 to 325 kg/mol.

The polypropylene compositions according to the invention may be prepared by mixing together the components by any suitable method known in the art like twin screw extruders, Banbury mixers, 2- or 4-roll rubber mills or Buss co-kneaders. Preferably, the mixing will be performed in a twin screw extruder with one or more high intensity mixing segments and preferably at a temperature of 170 to 270 °C, more preferably of 180 to 250 °C.

The invention is furthermore directed to an article made of the polypropylene compositions according to all embodiments of the present invention, especially molded articles and in particular injection molded articles. The inventive polypropylene composition is especially suitable for car components or other technical component requiring high mechanical strength and dimensional stability.

The invention is further directed to the use of the propylene compositions according to all embodiments of the present invention for the production of car components, e.g. fenders.

The invention is further directed to the use of a propylene homo- or copolymer (B) having a weight average molecular weight ($M_w$) of at least 900 kg/mol in a composition further comprising

- a propylene homo- or copolymer (A) having a weight average molecular weight in the range of 25 to 325 kg/mol;
- an inorganic filler (C)

for lowering the coefficient of thermal expansion.

The present invention is also directed to the use of a propylene homo- or copolymer (B) having a weight average molecular weight ($M_w$) of at least 900 kg/mol in combination with an inorganic filler (C) for reinforcing a second propylene homo- or copolymer (A) which is different from propylene homo- or copolymer (B) as to its weight average molecular weight, whereby propylene homo- or copolymer (A) has a weight average molecular weight in the range of 25 to 325 kg/mol.

All references given herein are herewith incorporated by reference.

Fig. 1 shows the calibration curve used for the determination of the weight average molecular weight of propylene homo- or copolymer (B).

In the following the present invention is further illustrated by means of non-limiting examples.

**Examples**

Definition of test methods:

The test specimen for the measurement of the tensile modulus, charpy notch impact strength, tensile properties, heat deflection temperature and shrinkage of the propylene homo- or copolymer (A) is either

consisting of 99.75 wt.% of the propylene homo- or copolymer and as usual additives 0.10 wt.% Tris(2,4-di-tert butylphenyl)phosphite), 0.10 wt.% Pentaerythritol Tetrakis(3-(3,5-di-*tert*-butyl-4-hydroxyphenyl)propionate (e.g. Irganox B225 distributed by Ciba Specialty chemicals) and 0.05 wt.% Ca-Stearate (e.g. "SP" distributed by Faci) or

consisting of 99.70 wt.% of the propylene homo- or copolymer and as usual additives 0.10 wt.% Tris(2,4-di-*tert*-butylphenyl)phosphite), 0.10 wt.% Pentaerythritol Tetrakis(3-(3,5-di-*tert*-butyl-4-hydroxyphenyl)propionate (e.g. Irganox B225 distributed by Ciba Specialty chemicals) and 0.10 wt.% (Carbonato(2-))Hexadecahydroxybis(Aluminium) Hexamagnesium (synthetic hydrotalcid CAS-No. 11097-59-9).

The test specimen for the measurement of the tensile modulus, charpy notch impact strength, tensile properties, heat deflection temperature and shrinkage of the propylene homo- or copolymer (B) is consisting of 99.33 wt.% of the propylene homo- or copolymer and as usual additives 0.07 wt. % Calcium Stearate (e.g. SP distributed by Faci) and 0.30 wt.% Tris(2,4-di-*tert*-butylphenyl)phosphite), 0.30 wt.% Pentaerythritol Tetrakis(3-(3,5-di-*tert*-butyl-4-hydroxyphenyl)propionate (e.g. Irganox B225 distributed by Ciba Specialty chemicals).

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

b) Charpy notched impact test

Charpy impact strength was determined according to ISO 179-1eA:2000 on V-notched samples of 80x10x4 $mm^3$ at +23 °C. The test specimens were prepared by injection moulding in line with ISO 1873-2.

c) Tensile test

Tensile tests are performed according to ISO 527-2 at +23 °C on injection molded specimen (type 1B, 4 mm thickness) prepared by injection moulding in line with ISO 1873-2.

The tensile modulus (E-modulus) was calculated from the linear part of said tensile test results, conducting that part of the measurement with an elongation rate of 5 mm/min.

For determining tensile stress at yield (in MPa), tensile strain at yield (in %), tensile strength (in MPa), tensile strain at tensile strength (in %), tensile stress at break (in MPa) and tensile strain at break (in %) the aforementioned tensile test according to ISO 527-2 at +23 °C was continued with an elongation rate of 50 mm/min until the specimen broke.

d) Density

Density of the polymer was measured according to ISO 1183/D on compression moulded specimens

e) complex viscosity and zero shear viscosity

Dynamic rheological measurements were carried out with an Anton Paar MCR501 rheometer on compression molded samples under nitrogen atmosphere at 230 °C using 25 mm diameter plate and plate geometry. A range of frequency ($\omega$) [(omega)] from 10-2 to $5.10^2$ was covered in the measurement. The complex viscosity, $\eta^*(\omega)$ [eta*(omega)], was calculated from the storage and loss moduli G',G"($\omega$) [G', G"(omega)] as

$$\eta^{*}(\omega) = (G'(\omega)^{2} + G''(\omega)^{2})^{1/2} / \omega$$

$$[eta^{*}(omega) = (G'(omega)^{2} + G''(omega)^{2})^{1/2} / omega]$$

For calculating the zero shear viscosity, validity of the Cox/Merz relation

$$\eta(\gamma') = \eta^{*}(\omega) \text{ for } \gamma' = \omega$$

[eta(gamma') = eta*(omega) for gamma = omega]
with $\gamma'$ [gamma'] being the shear rate was assumed. The zero shear viscosity, $\eta_0$ [eta$_0$], was then determined from the lower limit of the viscosity curve $\eta(\gamma')$ [eta(gamma')].

f) weight average molecular weight of component (B)

The weight average molecular weight ($M_w$) was calculated from the zero shear viscosity ($\eta_0$) [eta$_0$] as resulting from a Cox-Merz conversion of the complex viscosity, and with the help of a calibration curve established in Grein et al. Rheol.Acta 46 (2007) 1083-1089.

g) Polydispersity index (PI):

Dynamic rheological measurements were carried out with an Anton Paar MCR501 rheometer on compression molded samples under nitrogen atmosphere at 230 °C using 25 mm diameter plate and plate geometry. The oscillatory shear experiments were done within the linear viscoelastic range of strain at frequencies from 0.01 to 500 rad/s in line with ISO 6721-1.
The values of storage modulus (G'), loss modulus (G"), complex modulus (G*) and complex viscosity ($\eta^*$) [(eta*)] were obtained as a function of frequency ($\omega$) [(omega)]. The polydispersity index,

$$PI = 10^{5}/G_{c},$$

is calculated from cross-over point of G'($\omega$) [G'(omega)] and G"($\omega$) [G"(omega)] at 230°C, for which
G'($\omega_c$) = G"($\omega_c$) = G$_c$ [G'(omega$_c$) = G"(omega$_c$) = G$_c$]
holds.

h) cold xylene solubles:

Determination of xylene soluble fraction (XS):

2.0 g of polymer is dissolved in 250 ml p-xylene at 135 °C under agitation. After 30 minutes the solution is allowed to cool for 15 minutes at ambient temperature and then allowed to settle for 30 minutes at 25 °C. The solution is filtered with filter paper into two 100 ml flasks.
The solution from the first 100 ml vessel is evaporated in nitrogen flow and the residue is dried under vacuum at 90 °C until constant weight is reached.
XS% = (100×m×V$_o$)/(m$_o$×v); m$_o$ = initial polymer amount (g); m = weight of residue (g); V$_o$ = initial volume (ml); v = volume of analyzed sample (ml).

i) weight average molecular weight of component (A) by GPC measurements

The weight average molecular weight M$_w$ is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/l 2,6-di-*tert*-butyl-4-methyl-phenol) as solvent at 145 °C and at a constant flow rate of 1 ml/min. 216.5 microliter of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 ml (at 160 °C) of stabilized TCB (same as mobile phase) and keeping for 3 hours with continuous shaking prior sampling in into the GPC instrument.

k) Heat Deflection Temperature (HDT):

The HDT was determined on injection molded test specimens of 80x10x4 $mm^3$ prepared according to ISO 1873-2 and stored at +23°C for at least 96 hours prior to measurement. The test was performed on flatwise supported specimens according to ISO 75-2, condition A, with a nominal surface stress of 1.80 MPa.

l) Differential Scanning Calorimetry (DSC):

DSC is run according to ISO 3146 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step.

m) intrinsic viscosity

The intrinsic viscosity is measured according to DIN ISO 1628/1, October 1999 in decalin at 135 °C.

n) Shrinkage:

The shrinkage was measured on injection molded rectangular plates of 150 x 80 x 2 $mm^3$ filled with a triangular distributor and a 0.5 mm thick film gate along the shorter side. A melt temperature of 260°C, a mold temperature of 60°C and an injection speed at the gate of 100 mm/s were used for producing the specimens which were cut free from the distributor immediately after demolding. The specimens were then stored at +23°C for 14 days and the relative shrinkage against the mold dimension was determined in both longitudinal (flow) and transversal direction (perpendicular to the flow direction), measuring in the center of the specimen in each case. 10 specimens were tested for determining average values, and the difference was calculated from the averages.

o) Particle size (filler before compounding)

The particle sizes d50 and d95 are calculated from the particle size distribution measured by laser diffraction according to ISO 13320-1:1999.

p) Specific surface of filler

The specific surface of the filler is determined according to DIN 66131/2.

q) Average aspect ratio of filler

The average aspect ratio has been determined by recording transmission electron microscopy (TEM) images of the pure inorganic filler prepared onto film-coated TEM grids from an aqueous suspension by rotating the sample in 1° intervals from -75° to +75° , e.g. with JEOL JEM-2100 microscope, and reconstructing the three dimensional structure (e.g. with the JEOL TEMograph™ software). 100 particles were measured and the average calculated. The aspect ratio of a particle is the ratio of the longest and shortest particle radii that pass through the geometric centre of the particle.
In case of anisotropy in one dimension (fiber-like) or two dimensions (platelet-like) structures the geometric center equals the center of gravity of the particle.

**Compositions**

Used components

component (A1).

This is a high crystallinity propylene homopolymer with 0.10 wt.% Tris(2,4-di-*tert*-butylphenyl)phosphite), 0.10 wt.% Pentaerythritol Tetrakis(3-(3,5-di-*tert*-butyl-4-hydroxyphenyl)propionate (e.g. Irganox B225 distributed by Ciba Specialty chemicals) and 0.10 wt.% (Carbonato(2-))Hexadecahydroxybis(Aluminium) Hexamagnesium (synthetic hydrotalcid CAS-No. 11097-59-9) as additives and having a density of 920 kg/m$^3$; a Melt Flow Rate (230 °C/2.16 kg) of 20 g/10min (ISO 1133), a tensile modulus (1 mm/min) of 2.166 MPa (ISO 527-2); a tensile strain at yield (50 mm/min) of 5.70 % (ISO 527-2); a tensile stress at yield (50 mm/min) of 40.7 MPa (ISO 527-2); Heat Deflection Temperature (0.45 N/mm$^2$) of 122 °C (ISO 75B) measured on injection molded specimens acc. to ISO 1873-2 ; a charpy impact strength of V-notched samples at 23 °C of 3.1 kJ/m$^2$

component (A2)

The experimental polypropylene homopolymer has been produced in a Borstar PP pilot plant as follows:

The catalyst has been prepared as defined in EP 0 591 224 B1.

(Ti = 1.9 wt.-%), cyclohexyl methylmethoxy silane (CHMMS) was used as donor and triethyl-aluminium (TEA) as cocatalyst with a TEA/C$_3$ ratio [g/kg] of 0.20 and a TEA/donor ratio [wt%/wt%] of 15. The catalyst was fed in paste form at a concentration of 100 g/l in a mixture of 70 vol% paraffin oil and 30 vol% vaseline fat, prepolymerized in liquid propylene at 20 °C in a stirred prepolymerization reactor having an average residence time of 7 minutes. The actual polymerization was carried out in a single loop reactor at a temperature of 62 °C and a pressure of 3400 kPa feeding propylene at a rate of 66.5 kg/h with 80000 ppm of hydrogen. A catalyst productivity of 14.3 kg/g was achieved.

Following deactivation of the catalyst with steam and drying of the resulting polymer powder with warm nitrogen, the resulting polypropylene homopolymer was compounded together with 0.05 wt. % Calcium Stearate (SP distributed by Faci) and 0.20 wt. % Irganox B225 (antioxidant combination supplied by Ciba Specialty Chemicals) in a twin screw extruder at 210 to 230 °C. An MFR$_2$ value of 260 g/10min was determined.

component (B1)

The experimental polypropylene homopolymer has been produced in a Borstar PP pilot plant as follows:

The catalyst has been prepared as defined in EP 0 591 224 B1.

(Ti = 1.9 wt.-%), dicyclopentyl dimethoxy silane (DCPDMS) was used as donor and triethyl-aluminium (TEA) as cocatalyst with a TEA/C$_3$ ratio [g/kg] of 0.20 and a TEA/donor ratio [wt%/wt%] of 2. The catalyst was fed in paste form at a concentration of 100 g/l in a mixture of 70 vol% paraffin oil and 30 vol% vaseline fat, prepolymerized in liquid propylene at 20 °C in a stirred prepolymerization reactor having an average residence time of 7 minutes. The actual polymerization was carried out in a single loop reactor at a temperature of 70°C and a pressure of 3500 kPa feeding propylene at a rate of 65.8 kg/h in absence of hydrogen. A catalyst productivity of 14.4 kg/g was achieved.

Following deactivation of the catalyst with steam and drying of the resulting polymer powder with warm nitrogen, the resulting polypropylene homopolymer was compounded together with 0.07 wt. % Calcium Stearate (SP distributed by Faci) and 0.60 wt. % Irganox B225 (antioxidant combination supplied by Ciba Specialty Chemicals) in a twin screw extruder at 270 to 300 °C. Before compounding an MFR$_{21}$ value of 0.94 g/10min was determined on the powder, while after compounding an MFR$_{21}$ value of 2.80 g/10min and an MFR2 value of 0.02 g/10min were determined. The polymer is further characterized by an XS content of 2.5 wt%, an intrinsic viscosity of 7.74 dl/g and a melting point as determined by DSC of 168.5 °C.

component (B2)

This experimental polypropylene homopolymer was produced in a Borstar PP pilot plant with the same combination of catalyst and donor as B1. The actual polymerization was started in a loop reactor at a temperature of 70 °C and a pressure of 3500 kPa feeding propylene at a rate of 65,8 kg/h in absence of hydrogen, the resulting polymer powder being transferred to a gas phase reactor operated at 85°C and a pressure of 1200 kPa, again feeding only propylene without hydrogen. The residence time in the two reactors was selected such as to achieve a production of 82 wt% in the loop reactor and 18 wt% in the gas phase reactor; a catalyst productivity of 18.5 kg/g was achieved.

The same stabilization and compounding procedure as for B1 was applied. Before compounding an MFR$_{21}$ value of 0.74 g/10min was determined on the powder, while after compounding an MFR$_{21}$ value of 1.40 g/10min and an MFR2 value of 0.01 g/10min were determined. The polymer is further characterized by an XS content of 1.7 wt%, an intrinsic viscosity of 8.42 dl/g and a melting point as determined by DSC of 167.5 °C.

component (B3)

This experimental polypropylene homopolymer was produced in a Borstar PP pilot plant with the same combination of catalyst and donor as B1. The actual polymerization was started in a loop reactor at a temperature of 70 °C and a pressure of 3500 kPa feeding propylene at a rate of 65,8 kg/h in absence of hydrogen, the resulting polymer powder being transferred to a first gas phase reactor operated at 85°C and a pressure of 1200 kPa, again feeding only propylene without hydrogen, the now resulting polymer powder being again transferred to a second gas phase reactor operated at 85°C and a pressure of 1200 kPa, feeding propylene with 730 ppm hydrogen to reduce the molecular weight of the polymer produced in this step. The residence time in the three reactors was selected such as to achieve a production of 75 wt% in the loop reactor, 16 wt% in the first gas phase reactor and 9 wt% in the second gas phase reactor; an overall catalyst productivity of 19.8 kg/g was achieved.

The same stabilization and compounding procedure as for B1 was applied. Before compounding an $MFR_{21}$ value of 2.50 g/10min was determined on the powder, while after compounding an $MFR_{21}$ value of 3.50 g/10min and an MFR2 value of 0.03 g/10min were determined. The polymer is further characterized by an XS content of 1.7 wt%, an intrinsic viscosity of 6.88 dl/g and a melting point as determined by DSC of 166.7 °C.

In the following table the properties of components B1 to B3 are summarized:

| | B1 | B2 | B3 |
|---|---|---|---|
| $MFR_{21}$ [g/10 min] of the polymer as obtained from the reactor | 0.94 | 0.74 | 2.5 |
| $MFR_{21}$ [g/10 min] of the polymer after compounding | 2.80 | 1.40 | 3.5 |
| $MFR_2$ [g/10 min] of the polymer after compounding | 0.02 | 0.01 | 0.03 |
| Xylene solubles [wt.%] | 2.5 | 1.7 | 1.7 |
| Intrinsic viscosity [dl/g] | 7.74 | 8.42 | 6.88 |
| $T_m$ [°C] | 168.5 | 167.5 | 166.7 |
| polydispersity index [$Pa^{-1}$] | 2.904 | 3.709 | 3.671 |
| $M_w$ [kg/mol] | 1263.0 | 1154.9 | 1338.8 |

component C1:

Jetfine 3CA, distributed by Luzenac, which is a talc having

- a screen residue (Alpine Airjet) of 0.03 % of particles > 15 $\mu$m

- a d50 value of 1.0 $\mu$m and a d95 value of 3.3 $\mu$m, both calculated from the particle size distribution measured by laser diffraction according to ISO 13320-1:1999.

- a specific surface area measured according to DIN 66131/2 of 14.5 $m^2$/g

- a specific gravity determined according to ISO 787/10 of 2.78 g/$cm^3$

- a hardness on the Mohs' scale of 1

- a moisture content determined according to ISO 787/2 of $\leq$ 0.3 %

- an average aspect ratio of 9.5

component C2:

HAR T84, distributed by Luzenac, which is a talc having

- a d50 value of 2 $\mu$m and a d95 value of 10 $\mu$m, both calculated from the particle size distribution measured by laser diffraction according to ISO 13320-1:1999.

- a specific surface area measured according to DIN 66131/2 of 16 $m^2$/g

- a specific gravity determined according to ISO 787/10 of 2.78 g/$cm^3$

- a hardness on the Mohs' scale of 1

- a moisture content determined according to ISO 787/2 of ≤ 0.3 %

- an average aspect ratio of 14.5

Comparative Examples CE1 to CE12:

In a comparative test component A1 and A2 have been melt blended with components B1 to B3 respectively in different amounts without the addition of inorganic filler to yield comparative examples CE1 to CE12.

The compounding of the compositions was performed in a twin screw extruder (Thermo prism TSE 24 (24 mm screw diameter, LD ratio 40)) with two high intensity mixing segments and at a temperature of 190 to 230 °C.

In addition to the amounts of A1, A2 and B1 to B3 given in table 1 CE1 to CE12 further contain

- Irganox B225 which is a blend of 50 wt.% Irgafos 168 and 50 wt.% Irganox 1010 (distributed by Ciba) in an amount of 0.1 wt.%

- Irganox HP2215 which is a blend of 57 wt.% Irgafos 168, 28 wt.% Irganox 1010 and 15 wt.% Irganox HP 136 (distributed by Ciba which is a mixture of 90% of 5,7-di-tert-butyl-3-(3,4-dimethylphenyl)3H-benzofuran-2-one and 10% of 5,7-di-tert-butyl-3-(2,3-dimethylphenyl)3H-benzofuran-2-one) in an amount of 0.1 wt.%

- Calcium Stearate (SP distributed by Faci) in an amount of 0.1 wt.%

The results are shown in table 1 below.

| table 1 | | REF1 | CE1 | CE2 | CE3 | CE4 | CE5 | CE6 |
|---|---|---|---|---|---|---|---|---|
| B1 | [wt.%] | - | 10 | 20 | - | - | - | - |
| B2 | [wt.%] | - | - | - | 10 | 20 | - | - |
| B3 | [wt.%] | - | - | - | - | - | 10 | 20 |
| A1 | [wt.%] | 100 | 89.7 | 79.7 | 89.7 | 79.7 | 89.7 | 79.7 |
| A2 | [wt.%] | - | - | - | - | - | - | - |
| **MFR, 2.16 kg, 230°C** | [g/10min] | 20 | 10.4 | 4.86 | 10.8 | 5.71 | 10.9 | 5.6 |
| **Crystallization** | | | | | | | | |
| melting temperature | [°C] | 167 | 167.7 | 169 | 168 | 168.7 | 168.2 | 168.2 |
| heat of fusion | [J/g] | 121 | 137 | 127.9 | 139.8 | 123.8 | 134 | 126.6 |
| crystallization temperature | [°C] | 131 | 129.4 | 128.3 | 129.3 | 128.5 | 128.9 | 128.7 |
| heat of crystallization | [J/g] | 118 | 115.1 | 111.5 | 116.1 | 111.2 | 114 | 109.2 |
| **tensile test (ZV527, 23°C)** | | | | | | | | |
| tensile modulus | [MPa] | 2166 | 2409.5 | 2177.9 | 2403.4 | 2151.7 | 2383.1 | 2178.6 |
| tensile stress at yield | [MPa] | | X | 41.2 | X | 40.9 | 42.3 | 41.3 |
| tensile strain at yield | [%] | 5.70 | X | 6 | X | 6.1 | 5.1 | 6.1 |
| tensile strength | [MPa] | 40.7 | 42.5 | 41.2 | 42.4 | 40.9 | 42.3 | 41.3 |
| tensile strain at tensile strength | [%] | | 5.05 | 6.05 | 5.08 | 6.05 | 5.12 | 6.07 |
| tensile stress at break | [MPa] | | 35.6 | 29.7 | 36.3 | 28.6 | 34.8 | 27.4 |
| tensile strain at break | [%] | | 11.3 | 15.83 | 11.2 | 16.42 | 12.93 | 17.99 |
| **Charpy impact test** | | | | | | | | |
| ISO179/1eA (V-notched, 23°C) | [kJ/m$^2$] | 3.1 | 1.9 | 2.2 | 1.9 | 2 | 2 | 1.9 |
| **HDT (ISO 75-2A: 1.8 MPa)** | [°C] | | 60.9 | 59.2 | 62.2 | 59.1 | 62.7 | 59 |

| table 1 continued | | REF2 | CE7 | CE8 | CE9 | CE10 | CE11 | CE12 |
|---|---|---|---|---|---|---|---|---|
| B1 | [wt.%] | - | 10 | 20 | - | - | - | - |
| B2 | [wt.%] | - | - | - | 10 | 20 | - | - |
| B3 | [wt.%] | - | - | - | - | - | 10 | 20 |
| A1 | [wt.%] | - | - | - | - | - | - | - |
| A2 | [wt.%] | 100 | 89.7 | 79.7 | 89.7 | 79.7 | 89.7 | 79.7 |
| **MFR, 2.16 kg, 230°C** | [g/10min] | 264 | 140 | 56.7 | 119.3 | 62.4 | 137.2 | 78.7 |
| **Crystallization** | | | | | | | | |
| melting temperature | [°C] | 161.2 | 161.9 | 161.2 | 159.8 | 160.6 | 161.3 | 160.7 |
| heat of fusion | [J/g] | 109.4 | 126.4 | 119.6 | 110.8 | 111.7 | 114.4 | 122.3 |
| crystallization temperature | [°C] | 110.2 | 113.3 | 115.5 | 113.4 | 113.5 | 117 | 115.7 |
| heat of crystallization | [J/g] | 96.8 | 104.1 | 104.6 | 90.3 | 103.8 | 104.6 | 104.5 |
| **tensile test (ZV527, 23°C)** | | | | | | | | |
| tensile modulus | [MPa] | 1650 | 1759 | 1974 | 1707 | 1884 | 1932 | 1890 |
| tensile strength | [MPa] | 27.2 | 30.5 | 34.5 | 29.9 | 36.7 | 30.4 | 37.1 |
| tensile strain at tensile strength | [%] | 3.2 | 2.6 | 2.89 | 2.63 | 4.75 | 2.17 | 5.05 |
| tensile stress at break | [MPa] | 26.2 | 30.4 | 34.5 | 29.9 | 36.7 | 30.4 | 37.1 |
| tensile strain at break | [%] | 3.6 | 2.6 | 2.89 | 2.63 | 4.8 | 2.17 | 5.24 |
| **Charpy impact test** | | | | | | | | |
| ISO179/1eA (V-notched, 23°C) | [kJ/m$^2$] | 1.2 | 1 | 1.2 | 1.2 | 1.5 | 1 | 1.3 |
| **HDT (A: 1.8 MPa)** | [°C] | 50 | 53 | 56 | 54 | 56 | 54 | 55 |

Comparative example CE13

In a further comparative test A1 has been melt blended with C2, the results are shown in table 2 below.

Composition CE13 further comprises

- Irganox B225 which is a blend of 50 wt.% Irgafos 168 and 50 wt.% Irganox 1010 (distributed by Ciba) in an amount of 0.1 wt.%

- Irganox HP2215 which is a blend of Blend of 57 wt.% Irgafos 168, 28 wt.% Irganox 1010 and 15 wt.% Irganox HP 136 (distributed by Ciba which is a mixture of 90% of 5,7-di-tert-butyl-3-(3,4-dimethylphenyl)3H-benzofuran-2-one and 10% of 5,7-di-tert-butyl-3-(2,3-dimethylphenyl)3H-benzofuran-2-one) in an amount of 0.1 wt.%

- Calcium Stearate (SP distributed by Faci) in an amount of 0.1 wt.%

Inventive examples 1 to 8 (IE1-IE8):

These compositions are triblends comprising A1, A2, B1, B2, B3, C1 and C2 in the amounts given in table 2 below. In addition to said amounts IE1 to IE8 further contain

- Irganox B225 (distributed by Ciba Specialty Chemicals) which is a blend of 50 wt.% Irgafos 168 (Tris(2,4-di-*tert*-butylphenyl)phosphite) and 50 wt.% Irganox 1010 (Pentaerythritol Tetrakis(3-(3,5-di-*tert*-butyl-4-hydroxyphenyl)propionate) in an amount of 0.1 wt.%

- Irganox HP2215 (distributed by Ciba Specialty Chemicals) which is a blend of 57 wt.% Irgafos 168 (Tris(2,4-di-*tert*-butylphenyl)phosphite), 28 wt.% Irganox 1010 (Pentaerythritol Tetrakis(3-(3,5-di-*tert*-butyl-4-hydroxyphenyl)propionate) and 15 wt.% Irganox HP 136 (distributed by Ciba which is a mixture of 90% of 5,7-di-tert-butyl-3-(3,4-dimethylphenyl)3H-benzofuran-2-one and 10% of 5,7-di-tert-butyl-3-(2,3-dimethylphenyl)3H-benzofuran-2-one) in an amount of 0.1 wt.%

- Calcium Stearate (SP distributed by Faci) in an amount of 0.1 wt.%

The compounding of the compositions was performed in a twin screw extruder with two high intensity mixing segments and at a temperature of 190 to 230 °C.

The results are shown in table 2 below.

| table 2 | | CE13 | IE1 | IE2 | IE3 | IE4 |
|---|---|---|---|---|---|---|
| B1 | [wt.%] | - | 20 | - | - | - |
| B2 | [wt.%] | - | - | 20 | - | - |
| B3 | [wt.%] | - | - | - | 20 | 20 |
| A1 | [wt.%] | 90 | 69.7 | 69.7 | 69.7 | 69.7 |
| A2 | [wt.%] | - | - | - | - | - |
| C1 Jetfine 3CA | [wt.%] | - | 10 | 10 | 10 | - |
| C2 HAR T84 | [wt.%] | 10 | - | - | - | 10 |
| **MFR 2.16 kg, 230°C** | [g/10min] | 20.4 | 3.7 | 3.7 | 3.7 | 3.1 |
| **Crystallization** | | | | | | |
| melting temperature | [°C] | 167.6 | 167.5 | 167.6 | 167.3 | 167 |
| heat of fusion | [J/g] | 108.7 | 105.3 | 114.9 | 106.2 | 109.5 |
| crystallization temperature | [°C] | 131.0 | 130.6 | 130.2 | 130.2 | 129.6 |
| heat of crystallization | [J/g] | 104.5 | 96.7 | 100 | 103.1 | 100.2 |
| **tensile test (ZV527, 23°C)** | | | | | | |
| tensile modulus | [MPa] | 3495 | 2932 | 2946 | 3021 | 3247 |
| tensile strength | [MPa] | 42.8 | 39.9 | 40 | 40.8 | 41.5 |
| tensile strain at tensile strength | [%] | 3.62 | 4.53 | 4.34 | 4.52 | 4.29 |
| tensile stress at break | [MPa] | 34.2 | 35.3 | 35.7 | 32.9 | 24.7 |
| tensile strain at break | [%] | 9.62 | 8.06 | 7.41 | 9.76 | 12.74 |
| **Charpy impact test (ISO179, 23°C)** | | | | | | |
| ISO179/1eA (notched, 23°C) | [kJ/m$^2$] | 1.9 | 2.7 | 2.8 | 3 | 3.2 |
| **HDT (ISO 75-2/A: 1.8 MPa)** | [°C] | 72 | 65 | 66 | 67 | 69 |
| **Shrinkage** | | | | | | |
| longitudinal | [%] | 0.880 | 1.467 | 1.492 | 1.516 | 1.38 |
| transversal | [%] | 1.043 | 1.124 | 1.141 | 1.128 | 1.082 |
| Δ(trans-longi)I | [%] | -0.264 | -0.343 | -0.351 | -0.388 | -0.298 |
| **table 2 continued** | | IE5 | IE6 | IE7 | IE8 | |
| B1 | [wt.%] | 20 | | | | |
| B2 | [wt.%] | | 20 | | | |
| B3 | [wt.%] | | | 20 | 20 | |
| A1 | [wt.%] | | | | | |
| A2 | [wt.%] | 69.7 | 69.7 | 69.7 | 69.7 | |
| C1 Jetfine 3CA | [wt.%] | 10 | 10 | 10 | | |
| C2 HAR T84 | [wt.%] | | | | 10 | |
| MFR 2.16 kg, 230°C | [g/10min] | 50.7 | 45.6 | 33.2 | 43.6 | |
| **Crystallization** | | | | | | |
| melting temperature | [°C] | 163.5 | 163.4 | 163.2 | 163.4 | |

(continued)

| table 2 continued | | IE5 | IE6 | IE7 | IE8 |
|---|---|---|---|---|---|
| heat of fusion | [J/g] | 108.2 | 104.5 | 112.7 | 111.8 |
| crystallization temperature | [°C] | 129 | 128.8 | 129.1 | 127.6 |
| heat of crystallization | [J/g] | 96.1 | 92.9 | 98.2 | 63.1 |
| **tensile test** (**ZV527, 23°C**) | | | | | |
| tensile modulus | [MPa] | 2590 | 2617 | 2735 | 3010 |
| tensile strength | [MPa] | 33.2 | 32.4 | 34 | 36.7 |
| tensile strain at tensile strength | [%] | 2.19 | 1.96 | 2.16 | 2.42 |
| tensile stress at break | [MPa] | 33.1 | 32.3 | 34 | 36.7 |
| tensile strain at break | [%] | 2.2 | 1.96 | 2.16 | 2.43 |
| **Charpy impact test** (**ISO179, 23°C**) | | | | | |
| ISO179/1eA (notched, 23°C) | [kJ/m$^2$] | 1.7 | 1.7 | 1.7 | 1.8 |
| **HDT (A: 1.8 MPa) Temperature** | [°C] | 62 | 61 | 63 | 67 |
| **Shrinkage** | | | | | |
| longitudinal | [%] | 1.015 | 0.843 | 1.099 | 0.921 |
| transversal | [%] | 1.013 | 1.004 | 1.001 | 0.938 |
| Δ(trans-longi) | [%] | -0.002 | 0.161 | -0.098 | 0.017 |

## Claims

1. A polypropylene composition comprising

   - a propylene homo- or copolymer (A);
   - a propylene homo- or copolymer (B) having a weight average molecular weight of at least 900 kg/mol; and
   - an inorganic filler (C) in an amount of at least 3.0 wt. % based on the total amount of the polypropylene composition

   whereby
   propylene homo- or copolymer (A) and propylene homo- or copolymer (B) are different as to their weight average molecular weights, whereby propylene homo- or copolymer (A) has a weight average molecular weight in the range of 25 to 325 kg/mol.

2. The polypropylene composition according to claim 1 wherein the following relation is fulfilled

$$E \times C \geq 7000 \frac{MPa \times kJ}{m^2}$$

   wherein

   E is the tensile modulus in MPa, determined according to ISO 527-2, of the polypropylene composition measured on a test specimen prepared by injection molding according to ISO 1873-2;
   C is the impact strength of the polypropylene composition in a charpy notch test according to ISO 179/1eA: 2000 at + 23 °C measured on a V-notched test specimen prepared by injection molding according to ISO 1873-2.

3. The polypropylene composition according to claim 1 or 2 having a tensile modulus, determined according to ISO 527-2, of at least 2500 MPa measured on a test specimen prepared by injection molding according to ISO 1873-2.

4. The polypropylene composition according to any of the preceding claims
   wherein

the propylene homo- or copolymer (A) is present in an amount of 45 to 92 wt.% based on the amounts of (A) + (B) + (C); and

the propylene homo- or copolymer (B) is present in an amount of 5 to 35 wt.% based on the amounts of (A) + (B) + (C); and

the inorganic filler (C) is present in an amount of not more than 20 wt.-% based on the amounts of (A) + (B) + (C).

5. The polypropylene composition according to any of the preceding claims wherein the average aspect ratio of component (C) is at least 5.0.

6. The polypropylene composition according to any of the preceding claims having an $MFR_2$, determined according to ISO 1133 at 230 °C and under a load of 2.16 kg of 1.0 g/10min to 80 g/10min.

7. The polypropylene composition according to any of the preceding claims, obtainable by compounding component (C) having a particle size d95 of 50 micrometer or less being measured by laser diffraction according to ISO 13320-1: 1999 with components (A) and (B).

8. A process for the production of a polypropylene composition according to any of the preceding claims.

9. An article made of the polypropylene composition according to any of the claims 1 to 7.

10. Use of the polypropylene composition according to any of the claims 1 to 7 for the production of car components.

11. Use of a propylene homo- or copolymer (B) having a weight average molecular weight ($M_w$) of at least 900 kg/mol in a composition comprising

- a propylene homo- or copolymer (A) having a weight average molecular weight in the range of 25 to 325 kg/mol;
- an inorganic filler (C)

for lowering the coefficient of thermal expansion.

12. Use of a propylene homo- or copolymer (B) having a weight average molecular weight ($M_w$) of at least 900 kg/mol in combination with an inorganic filler (C) for reinforcing a second propylene homo- or copolymer (A) which is different from propylene homo- or copolymer (B) as to its weight average molecular weight, whereby propylene homo- or copolymer (A) has a weight average molecular weight in the range of 25 to 325 kg/mol.

**Patentansprüche**

1. Polypropylenzusammensetzung, umfassend:

- ein Propylenhomo- oder -copolymer (A);
- ein Propylenhomo- oder -copolymer (B) mit einem Gewichtsmittel des Molekulargewichts von mindestens 900 kg/Mol; und
- einen anorganischen Füllstoff (C) in einer Menge von mindestens 3,0 Gew.-%, und zwar auf die Gesamtmenge der Polypropylenzusammensetzung bezogen;

wobei das Propylenhomo- oder -copolymer (A) und das Propylenhomo- oder -copolymer (B) bezüglich ihres Gewichtsmittels des Molekulargewichts unterschiedlich sind, wobei das Propylenhomo- oder -copolymer (A) ein Gewichtsmittel des Molekulargewichts im Bereich von 25 bis 325 kg/Mol hat.

2. Polypropylenzusammensetzung nach Anspruch 1, wobei folgender Zusammenhang gilt:

$$E \times C \geq 7000 \frac{\text{MPa x kJ}}{\text{m}^2}$$

worin:

E der Zugmodul in MPa, gemäß ISO 527-2 bestimmt, der Poly- propylenzusammensetzung ist, und zwar bei einer durch Spritzgießen hergestellten Testprobe gemäß ISO 1873-2 ge- messen;

C die Kerbschlagzähigkeit der Polypropylenzusammensetzung bei einem Charpy-Kerbtest gemäß ISO 179/1eA: 2000 bei +23°C ist, und zwar bei einer durch Spritzgießen hergestell- ten, V-gekerbten Testprobe gemäß ISO 1873-2 gemessen.

3. Polypropylenzusammensetzung nach Anspruch 1 oder 2, die einen Zugmodul, gemäß ISO 527-2 bestimmt, von mindestens 2500 MPa hat, und zwar bei einer durch Spritzgießen hergestellten Testprobe gemäß ISO 1873-2 gemessen.

4. Polypropylenzusammensetzung nach einem der vorstehenden Ansprüche, wobei

das Propylenhomo- oder -copolymer (A) in einer Menge von 45 bis 92 Gew.-% vorliegt, und zwar auf die Mengen von (A) + (B) + (C) bezogen; und

das Propylenhomo- oder -copolymer (B) in einer Menge von 5 bis 35 Gew.-% vorliegt, und zwar auf die Mengen von (A) + (B) + (C) bezogen; und

der anorganische Füllstoff (C) in einer Menge von nicht mehr als 20 Gew.-% vorliegt, und zwar auf die Mengen von (A) + (B) + (C) bezogen.

5. Polypropylenzusammensetzung nach einem der vorstehenden Ansprüche, wobei die durchschnittliche Verhältniszahl der Komponente (C) mindestens 5,0 beträgt.

6. Polypropylenzusammensetzung nach einem der vorstehenden Ansprüche, die einen $MFR_2$-Wert von 1,0 bis 80 g/ 10 min aufweist, und zwar gemäß ISO 1133 bei 230°C und unter einer Last von 2,16 kg bestimmt.

7. Polypropylenzusammensetzung nach einem der vorstehenden Ansprüche, die durch Vermengen der Komponente (C) mit einer Partikelgröße d95 von 50 $\mu$m oder weniger, die durch Laserbeugung gemäß ISO 13320-1:1999 ge- messen wird, mit den Komponenten (A) und (B) erhalten werden kann.

8. Verfahren zum Herstellen einer Polypropylenzusammensetzung nach einem der vorstehenden Ansprüche.

9. Gegenstand, der aus der Polypropylenzusammensetzung nach einem der Ansprüche 1 bis 7 hergestellt ist.

10. Verwendung der Polypropylenzusammensetzung nach einem der Ansprüche 1 bis 7 für die Herstellung von Fahrzeugbauteilen.

11. Verwendung eines Propylenhomo- oder -copolymers (B) mit einem Gewichtsmittel des Molekulargewichts ($M_W$) von mindestens 900 kg/Mol in einer Zusammensetzung, die folgendes aufweist:

- ein Propylenhomo- oder -copolymer (A) mit einem Gewichtsmittel des Molekulargewichts im Bereich von 25 bis 325 kg/Mol;
- einen anorganischen Füllstoff (C)

zur Verringerung des Wärmeausdehnungskoeffizienten.

12. Verwendung eines Propylenhomo- oder -copolymers (B) mit einem Gewichtsmittel des Molekulargewichts ($M_W$) von mindestens 900 kg/Mol in Kombination mit einem anorganischen Füllstoff (C) zum Verstärken eines zweiten Propylenhomo- oder -copolymers (A), das vom Propylenhomo- oder -copolymers (B) bezüglich seines Gewichtsmittels des Molekulargewichts verschieden ist, wobei das Propylenhomo- oder -copolymer (A) ein Gewichtsmittel des Molekulargewichts im Bereich von 25 bis 325 kg/Mol aufweist.

**Revendications**

1. Composition de polypropylène comprenant

- un homo- ou co-polymère de propylène (A) ;
- un homo- ou co-polymère de propylène (B) ayant une masse moléculaire moyenne en masse d'au moins 900 kg/mol ; et

- une charge inorganique (C) en une quantité d'au moins 3,0 % en poids par rapport à la quantité totale de la composition de polypropylène,

dans laquelle

l'homo- ou co-polymère de propylène (A) et l'homo- ou co-polymère de propylène (B) ont des masses moléculaires moyennes en masse différentes, l'homo- ou co-polymère de propylène (A) ayant une masse moléculaire moyenne en masse située dans la plage allant de 25 à 325 kg/mol.

2. Composition de polypropylène selon la revendication 1, dans laquelle la relation suivante est satisfaite :

$$E \times C \geq 7000 \quad \frac{MPa \times kJ}{m^2}$$

dans laquelle

E est le module de traction en MPa, déterminé conformément à la norme ISO 527-2, de la composition de polypropylène, mesuré sur une éprouvette préparée par moulage par injection conformément à la norme ISO 1873-2 ;

C est la résistance au choc de la composition de polypropylène dans un test de résistance au choc Charpy sur barreau entaillé conformément à la norme ISO 179/1eA:2000 à 23°C, mesurée sur une éprouvette à entaille en V préparée par moulage par injection conformément à la norme ISO 1873-2.

3. Composition de polypropylène selon la revendication 1 ou 2, ayant un module de traction, déterminé conformément à la norme ISO 527-2, d'au moins 2500 MPa, mesuré sur une éprouvette préparée par moulage par injection conformément à la norme ISO 1873-2.

4. Composition de polypropylène selon l'une quelconque des revendications précédentes, dans laquelle

l'homo- ou co-polymère de propylène (A) est présent en une quantité de 45 à 92 % en poids par rapport aux quantités de (A) + (B) + (C) ; et

l'homo- ou co-polymère de propylène (B) est présent en une quantité de 5 à 35 % en poids par rapport aux quantités de (A) + (B) + (C) ; et

la charge inorganique (C) est présente en une quantité non supérieure à 20 % en poids par rapport aux quantités de (A) + (B) + (C).

5. Composition de polypropylène selon l'une quelconque des revendications précédentes, dans laquelle le rapport d'aspect moyen du composant (C) est d'au moins 5,0.

6. Composition de polypropylène selon l'une quelconque des revendications précédentes, ayant un MFR$_2$, déterminé conformément à la norme ISO 1133 à 230°C sous une charge de 2,16 kg, de 1,0 g/10 min à 80 g/10 min.

7. Composition de polypropylène selon l'une quelconque des revendications précédentes, pouvant être obtenue par combinaison du composant (C) ayant une granulométrie d95 de 50 micromètres ou moins, mesurée par diffraction de laser conformément à la norme ISO 13320-1:1999, avec les composants (A) et (B).

8. Procédé pour la production d'une composition de polypropylène selon l'une quelconque des revendications précédentes.

9. Article fait de la composition de polypropylène selon l'une quelconque des revendications 1 à 7.

10. Utilisation de la composition de polypropylène selon l'une quelconque des revendications 1 à 7 pour la production de composants d'automobile.

11. Utilisation d'un homo- ou co-polymère de propylène (B) ayant une masse moléculaire moyenne en masse (M$_w$) d'au moins 900 kg/mol dans une composition comprenant

- un homo- ou co-polymère de propylène (A) ayant une masse moléculaire moyenne en masse située dans la plage allant de 25 à 325 kg/mol ;
- une charge inorganique (C)

pour abaisser le coefficient de dilatation thermique.

12. Utilisation d'un homo- ou co-polymère de propylène (B) ayant une masse moléculaire moyenne en masse ($M_w$) d'au moins 900 kg/mol en combinaison avec une charge inorganique (C) pour renforcer un deuxième homo- ou co-polymère de propylène (A) ayant une masse moléculaire moyenne en masse différente de celle de l'homo- ou co-polymère de propylène (B), l'homo- ou co-polymère de propylène (A) ayant une masse moléculaire située dans la plage allant de 25 à 325 kg/mol.

Fig. 1

$$y = 34{,}796x^{0{,}3194}$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03097731 A
- US 5141994 A
- EP 1183307 A
- WO 2008006586 A
- EP 591224 A
- WO 9426794 A
- EP 0316187 A2
- EP 0591224 B1

**Non-patent literature cited in the description**

- **Grein et al.** *Rheol Acta,* 2007, 1083-1089
- **Grein et al.** *Rheol.Acta,* 2007, vol. 46, 1083-1089